# EUROPÄISCHE PATENTANMELDUNG

(11) **EP 1 752 875 A2**
(43) Veröffentlichungstag der Anmeldung: **14.02.2007**
(21) Anmeldenummer: 06013332.9
(22) Anmeldetag: 28.06.2006
(51) Int. Cl.: G06F 9/45

(54) **Erzeugung und Ausführung von Programmen**

(30) Priorität: 19.07.2005 DE 102005033597
(71) Anmelder: Giesecke & Devrient GmbH, 81677 München (DE)
(72) Erfinder: Haunert, Lutz, Dr., 82110 Germering (DE)

(57) **Zusammenfassung**

Ein Verfahren zum Erzeugen mindestens eines zur Ausführung durch einen Prozessor (30) eines tragbaren Datenträgers (12) vorgesehenen Programms (Px) umfaßt ein außerhalb des Datenträgers (12) durchgeführtes Kompilieren von Quellcode (14.x) in eine prozessorunabhängige Zwischensprache (CIL) und ein außerhalb des Datenträgers (12) durchgeführtes Kompilieren der Zwischensprache (CIL) in eine für den Prozessor (30) des tragbaren Datenträgers (12) native Sprache (NL). Ein Verfahren zum Ausführen mindestens eines Programms (Px) durch einen Prozessor (30) eines tragbaren Datenträgers (12) umfaßt das Laden einer Zusammenstellung (24, 24.x) von einer außerhalb des Datenträgers (12) befindlichen Quelle in den Datenträger (12) und das native Ausführen (58) von nativem Code (50), der in der Zusammenstellung (24, 24.x) enthalten ist, durch den Prozessor (30) des Datenträgers (12) in einem Programmausführungssystem (42). Ein tragbarer Datenträger (12), eine vorzugsweise als Programmentwicklungssystem (10) ausgestaltete Vorrichtung und ein Computerprogrammprodukt weisen entsprechende Merkmale auf.

## Beschreibung

Die Erfindung betrifft allgemein das technische Gebiet der Erzeugung eines Programms, das zur Ausführung auf einem tragbaren Datenträger vorgesehen ist, und der Ausführung eines solchen Programms. Ein tragbarer Datenträger im Sinne des vorliegenden Dokuments kann in unterschiedlichen Bauformen beispielsweise als Chipkarte (*Smart Card*) oder als Chipmodul *(Smart Token*) ausgestaltet sein.

WO 00/75776 A1 beschreibt ein System, bei dem Programme mehrerer Programmiersprachen durch je einen auf einem Server ausgeführten Compiler in eine gemeinsame Zwischensprache umgewandelt werden. Jedes in der Zwischensprache verfügbare Programm kann über ein Netzwerk auf einen tragbaren Datenträger geladen werden. Auf dem Datenträger wird das Programm in einem Laufzeitsystem zur Verwendung von Programmbibliotheken ausgeführt.

Bei dieser bekannten Technik wird in dem Datenträger erheblicher Speicherplatz für die zur Ausführung des Programms in der Zwischensprache erforderlichen Komponenten benötigt. Auch die eigentliche Programmausführung erfordert erhebliche Ressourcen des Datenträgers sowohl im Hinblick auf den Speicherbedarf als auch auf die Rechenleistung. Dies ist problematisch, weil tragbare Datenträger aus Kosten- und Platzgründen nur relativ wenig Speicher und relativ geringe Rechenleistung aufweisen. Aus diesem Grund sind auch an sich wünschenswerte Optimierungen bei der Ausführung eines Zwischensprachen-Programms auf einem tragbaren Datenträger schwierig oder unmöglich.

Die Publikation *"Common Language Infrastructure (CLI)",* 2. Auflage, Dezember 2002 von ECMA International, Genf, Schweiz, beschreibt die Norm ECMA-335, in der ein Rahmen für die Programmerzeugung, ausgehend von mehreren Quellsprachen hin zu einer gemeinsamen Zwischensprache, spezifiziert wird. Programme, die in der Zwischensprache vorliegen, werden in einem Programmausführungssystem unter Verwendung eines *Just-in-Time-*(JIT)-Compilers in nativen Code übersetzt und ausgeführt. Eine entsprechende Technik, bei der eine abweichende Terminologie üblich ist, wird von der Firma Microsoft Corporation, USA, als Microsoft® .NET® angeboten.

Auch bei der *Common Language Infrastructure* beziehungsweise der .NET-Technologie besteht jedoch das Problem, dass das Programmausführungssystem wegen des darin enthaltenen JIT-Compilers sowie der umfangreichen Klassenbibliotheken viel Speicherplatz benötigt, der bei tragbaren Datenträgern nicht oder nur eingeschränkt zur Verfügung steht. Ferner werden erhebliche Anforderungen an die zur Programmausführung benötigte Rechenleistung gestellt.

Die Erfindung soll demgemäß eine Technik bereitstellen, mit der Programme, die nicht notwendigerweise nur in einer einzigen Quellsprache geschrieben sind, so umgewandelt werden können, dass die Programme ressourcenschonend auf einem tragbaren Datenträger ausgeführt werden können. In bevorzugten Ausführungsformen sollen insbesondere eine besonders gute Speichernutzung und/ oder eine besonders hohe Ausführungsgeschwindigkeit erzielt werden. Ferner soll sich die erfindungsgemäße Technik in manchen Ausgestaltungen gut zur Verwendung mit unterschiedlichen Prozessoren von tragbaren Datenträgern eignen.

Erfindungsgemäß wird diese Aufgabe ganz oder zum Teil gelöst durch ein Verfahren mit den Merkmalen von Anspruch 1, ein Verfahren mit den Merkmalen von Anspruch 7, eine Vorrichtung nach Anspruch 13, einen tragbaren Datenträger nach Anspruch 14, und ein Computerprogrammprodukt gemäß Anspruch 15. Die abhängigen Ansprüche definieren optionale Merkmale mancher Ausführungsformen der Erfindung.

Die Erfindung geht von der Grundidee aus, Programme einer prozessorunabhängigen Zwischensprache außerhalb des Datenträgers in eine für den Prozessor des tragbaren Datenträgers spezifische, native Sprache zu übersetzen. Solcher nativer Programmcode kann dann in den Datenträger geladen und in einem geeigneten Programmausführungssystem ausgeführt werden.

Ein erheblicher Vorteil der Erfindung ist es, dass das auf dem Datenträger befindliche Programmausführungssystem schlank und ressourcenschonend ausgestaltet werden kann, weil nur wenige Komponenten - insbesondere kein JIT-Compiler und in manchen Ausgestaltungen auch keine oder nur eine reduzierte Klassenbibliothek - benötigt werden. Ferner steht außerhalb des Datenträgers genügend Rechenleistung für aufwändige Optimierungen zur Verfügung, so dass die erzeugten nativen - also in der Maschinensprache des Prozessors des Datenträgers vorliegenden - Programme eine maximale Ausführungsgeschwindigkeit erreichen.

In bevorzugten Ausführungsformen werden zur Erzeugung der Programme in der prozessorunabhängigen Zwischensprache Techniken eingesetzt, die als solche aus der Norm ECMA-335 beziehungsweise den .NET-Spezifikationen bekannt sind; insbesondere kann die *Common Intermediate Language* (CIL) als Zwischensprache verwendet werden. Auch die *Microsoft Intermediate Language* (MSIL) der .NET-Umgebung soll in der Wortwahl des vorliegenden Dokuments als CIL angesehen werden.

Vorzugsweise wird zum Kompilieren der Zwischensprache in die native Sprache ein Compiler verwendet, der eine Funktionalität zur wahlweisen Ersetzung von Programmen durch Programmvarianten aufweist. Eine solche Ersetzung kann wahlweise auf der Ebene der Zwischensprache oder auf der Ebene der nativen Sprache erfolgen.

In bevorzugten Ausgestaltungen lehnt sich auch die Programmausführung an die Norm ECMA-335 an; insbesondere kann der in den Datenträger geladene Code als verwalteter nativer Code ausgestaltet sein, dessen Ausführung in dem Programmausführungssystem von einem Sicherheitsmanager und/ oder einem Manager für nativen Code gesteuert und/ oder überwacht wird. In manchen Ausführungsformen kann der Datenträger ferner eine Funktionalität zum Laden und Ausführen von nicht-verwaltetem nativen Code aufweisen.

Der tragbare Datenträger, die vorzugsweise als Programmentwicklungssystem ausgestaltete Vorrichtung und das Computerprogrammprodukt weisen in bevorzugten Weiterbildungen Merkmale auf, die den oben erwähnten und/ oder den in den Verfahrensansprüchen genannten Merkmalen entsprechen. Das erfindungsgemäße Computerprogrammprodukt kann ein körperliches Medium sein, z.B. ein Halbleiterspeicher oder eine Diskette oder eine CD-ROM. Das Computerprogrammprodukt kann jedoch auch ein nicht-körperliches Medium sein, z.B. ein über ein Computernetzwerk übermitteltes Signal.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen zeigen:
Fig. 1 ein Blockdiagramm eines Entwicklungssystems und eines Datenträgers in einem Ausführungsbeispiel der Erfindung, wobei die Programmentwicklung in dem Entwicklungssystem genauer veranschaulicht ist,
Fig. 2 ein Blockdiagramm des Entwicklungssystems und des Datenträgers in dem Ausführungsbeispiel von Fig.1, wobei die Programmausführung in dem Datenträger genauer veranschaulicht ist,
Fig. 3 eine Darstellung wie in Fig. 2 in einer Ausführungsalternative, und
Fig. 4 eine Darstellung wie in Fig. 1 in einer weiteren Ausführungsalternative.

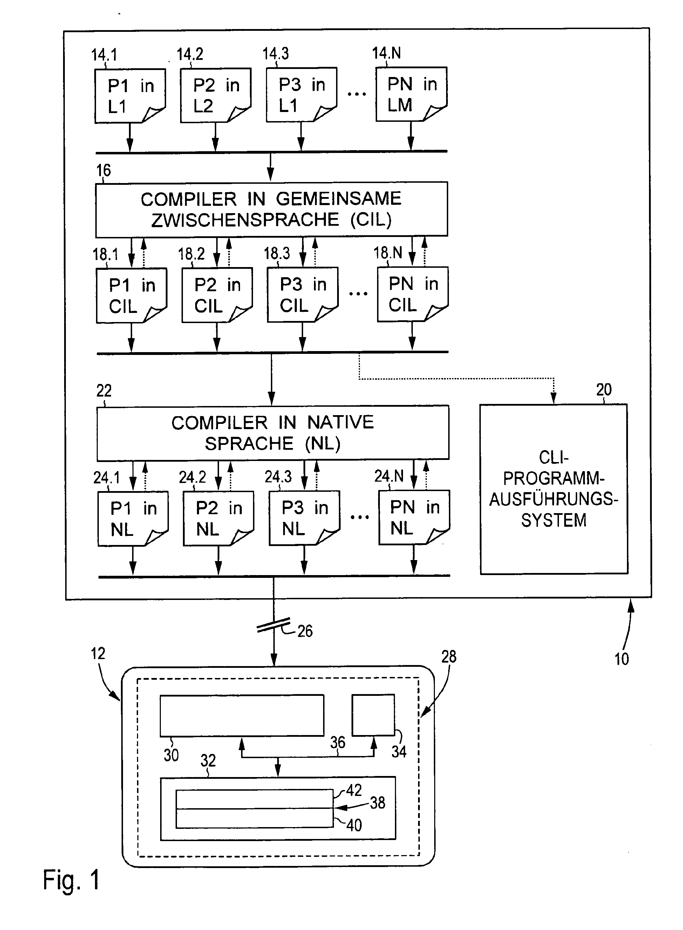

Fig. 1 zeigt überblicksartig Dateien und Programmkomponenten in einem Entwicklungssystem 10 sowie Elemente eines tragbaren Datenträgers 12. Das Entwicklungssystem 10 umfasst in der Regel einen oder mehrere persönliche Computer (PC) und einen oder mehrere Server; es kann jedoch auch nur einen einzigen Arbeitsplatzrechner aufweisen. Der tragbare Datenträger 12 ist eine an sich bekannte Chipkarte (*Smart Card)* oder ein Chipmodul *(Smart Token*).

Ein mit Hilfe des Entwicklungssystems 10 durchgeführtes Entwicklungsprojekt umfaßt eine Mehrzahl von Programmen P1, P2, ..., PN, die im folgenden zusammenfassend mit Px bezeichnet werden. Jedes dieser Programme Px liegt in unterschiedlichen Repräsentationen vor, nämlich erstens im Quellcode in unterschiedlichen Programmiersprachen L1, L2, ..., LM - im folgenden zusammenfassend mit Lx bezeichnet -, zweitens in einer gemeinsamen Zwischensprache CIL (CIL = *Common Intermediate Language)* und drittens in einer nativen Sprache NL (NL = *Native Language).*

In Fig. 1 ist der Quellcode der Programme Px mit den Bezugsziffern 14.1, 14.2, ...,14.N - im folgenden zusammenfassend mit 14.x bezeichnet - versehen. Die Programmiersprachen Lx, in denen der Quellcode 14.x verfasst ist, können Sprachen wie z.B. C#, C++, JAVA® und so weiter sein. Im hier beschriebenen Ausführungsbeispiel liegt der Quellcode 14.x in mehreren unterschiedlichen Programmiersprachen vor, aber es sind auch Entwicklungsprojekte möglich, bei denen nur eine einzige Programmiersprache verwendet wird.

Ein Compiler 16 übersetzt den Quellcode 14.x der Programme Px in eine gemeinsame Zwischensprache. Im vorliegenden Ausführungsbeispiel ist diese gemeinsame Zwischensprache die *Common Intermediate Language* (CIL) gemäß der Norm ECMA-335, die auch als *Microsoft Intermediate Language* (MSIL) des .NET*-Framework* bekannt ist. In Ausführungsalternativen können andere Zwischensprachen verwendet werden, insbesondere solche, für die ein Übersetzungspfad von mehreren unterschiedlichen Quellcode-Programmiersprachen Lx definiert ist. In einigen Ausführungsformen kann vorgesehen sein, dass bei der Programmentwicklung zumindest in manchen Quellcode-Programmiersprachen Lx auch Programmteile aus der Zwischensprache eingebunden werden können.

Als Ausgabe erzeugt der Compiler 16 für jedes Programm Px je eine Zusammenstellung *(Assembly)* 18.1,18.2, ...,18.N - im folgenden zusammenfassend mit 18.x bezeichnet - in der gemeinsamen Zwischensprache CIL. Wie aus der Norm ECMA-335 an sich bekannt ist, weisen die CIL-Zusammenstellungen 18.x jeweils Metadaten und verwalteten CIL-Code (*Managed CIL Code*) auf.

Der CIL-Code ist Programmcode für eine abstrakte virtuelle Maschine und somit prozessorunabhängig.

Die Bezeichnung als "verwalteter Code" (*Managed Code*) hat ihren Grund in der Tatsache, dass bei der Ausführung dieses Codes in einem geeigneten Programmausführungssystem diverse Sicherheitsüberprüfungen zur Laufzeit vorgenommen werden. Die Metadaten enthalten unter anderem die für diese Sicherheitsüberprüfungen erforderlichen Zusatzinformationen und weitere Daten, die z.B. bei der Programminstallation verwendet werden. In manchen Programmausgestaltungen ist optional vorgesehen, dass die in der gemeinsamen Zwischensprache enthaltenen Metadaten auch benutzerdefinierte Informationen zur Sicherheit von Software, wie z.B. Zugangsrechte und/ oder Ausführungsrechte, enthalten können. Die Auswertung der Metadaten ist zweckmäßig; optional kann darauf allerdings auch ganz oder teilweise verzichtet werden.

Gemäß der Norm ECMA-335 werden die CIL-Zusammenstellungen 18.x in einem CLI-Programmausführungssystem 20 (*Common Language Infrastructure Virtual Execution System*) ausgeführt. Ein solches Programmausführungssystem 20 ist im hier beschriebenen Ausführungsbeispiel auf einem Rechner des Entwicklungssystems 10 installiert, so dass Tests und Fehlerbeseitigungen für die Programme Px auf diesem Rechner durchgeführt werden können. Die für die spätere Programmausführung durch den Datenträger 12 vorgesehene Software besteht jedoch nicht aus den CIL-Zusammenstellungen 18x, sondern sie ergibt sich aus nativen Zusammenstellungen 24.1, 24.2, ..., 24.N - im folgenden zusammenfassend mit 24.x bezeichnet -, die von einem Compiler 22 aus den CIL-Zusammenstellungen 18.x generiert werden.

Unter "nativer Sprache" ist in diesem Zusammenhang die Maschinensprache eines Prozessors des tragbaren Datenträgers 12 zu verstehen, die auf dem Datenträger 12 ohne weitere Interpretation ausgeführt werden kann. Die native Sprache ist daher prozessorabhängig. Für jeden Prozessor oder jede Prozessorfamilie, für die nativer Code erzeugt werden soll, ist daher je ein eigener Compiler 22 - oder ein einziger Compiler 22 mit mehreren Modulen zur Umwandlung der gemeinsamen Zwischensprache CIL in unterschiedliche native Sprachen - vorgesehen.

Ein wesentliches Element der hier beschriebenen Ausführungsbeispiele ist es, dass der native Compiler 22 nicht auf dem tragbaren Datenträger 12, sondern im Zuge der Programmentwicklung im Entwicklungssystem 10 ausgeführt wird. Es stehen damit für den nativen Compiler 22 die gesamten Ressourcen eines leistungsfähigen Rechners des Entwicklungssystems 10 zur Verfügung, so dass auch aufwändige Verfahren zur Optimierung der erzeugten nativen Programme eingesetzt werden können. Der native Programmcode kann beispielsweise bezüglich des auf dem Datenträger 12 benötigten Speicherplatzes und/ oder bezüglich der Geschwindigkeit der späteren Programmausführung auf dem Datenträger 12 optimiert werden.

In manchen Ausgestaltungen sind ferner prozessorspezifische Optimierungen vorgesehen. So können beispielsweise spezielle Funktionen, die nur ein bestimmter Chipkarten-Prozessor oder eine bestimmte Prozessorfamilie zur Verfügung stellt, im nativen Programmcode verwendet werden, um die Ausführungsgeschwindigkeit weiter zu steigern und/ oder den Speicherbedarf zu minimieren. Für Prozessoren, die solche speziellen Funktionen nicht zur Verfügung stellen, muss der NL-Compiler 22 natürlich Maschinensprache-Sequenzen erzeugen, die dieselbe Wirkung haben.

Der Compiler 22 verarbeitet die CIL-Zusammenstellungen 18.x einschließlich ihrer Metadaten und erzeugt die nativen Zusammenstellungen 24.x, die ihrerseits jeweils optionale Metadaten und verwalteten nativen Code aufweisen. In unterschiedlichen Ausführungsformen können die Metadaten der nativen Zusammenstellungen 24.x entweder den Metadaten der CIL-Zusammenstellungen 18.x weitgehend entsprechen oder speziell an die Eigenschaften des jeweiligen tragbaren Datenträgers 12 angepasst sein; insbesondere kann vorgesehen sein, nur relevante CIL-Metadaten in die nativen Zusammenstellungen 24.x zu übernehmen.

Die durch den NL-Compiler 22 erzeugten nativen Zusammenstellungen 24.x werden im Zuge der Herstellung oder Initialisierung oder Personalisierung des Datenträgers 12 oder bei einem Nachladevorgang während der Verwendung des Datenträgers 12 in diesen übertragen. Es versteht sich, dass der Übertragungsvorgang nicht unmittelbar vom Entwicklungssystem 10 zum tragbaren Datenträger 12 zu erfolgen braucht; dies ist in Fig.1 durch den bei Bezugszeichen 26 unterbrochenen Pfeil angedeutet. Die nativen Zusammenstellungen 24.x können vielmehr z.B. über ein Netzwerk auf einem Server gespeichert werden und von dort über ein Terminal und ein geeignetes Ladeprogramm zum Datenträger 12 übermittelt werden.

In manchen Ausgestaltungen werden die nativen Zusammenstellungen 24.x als einzelne Dateien in den Datenträger 12 geladen, während sie in anderen Ausführungsformen zu einem gemeinsamen Programmpaket vereinigt und dann erst in den Datenträger 12 geladen werden. Auch geeignete Bindevorgänge können zusammen mit der Kompilierung in nativen Code oder im Anschluss daran oder im Zusammenhang mit der Übertragung zum tragbaren Datenträger 12 vorgenommen werden.

In einer Ausführungsalternative kann der NL-Compiler 22 als *Install Time Compiler* ausgebildet sein. Der Kompilierungsvorgang erfolgt dann im Zusammenhang mit dem Laden des Codes in den Datenträger 12. Ein als *Install Time Compiler* ausgestalteter NL-Compiler 22 kann von dem Entwicklungssystem 10 oder von einem Ladeterminal oder von einem auf dem Ladeweg befindlichen Server ausgeführt werden. Allerdings ist erfindungsgemäß nicht vorgesehen, dass der die nativen Zusammenstellungen 24.x erzeugende Compiler 22 von dem tragbaren Datenträger 12 zur Laufzeit des Programms ausgeführt wird. Der Compiler 22 ist daher kein *Just-in-Time-*(JIT)-Compiler, wie er bei einem *Common-Language-Infrastructure-*(CLI)*-System* gemäß der Norm ECMA-335 normalerweise vorgesehen ist.

Der Datenträger 12 ist in Fig. 1 schematisch mit einem Mikrocontroller 28 gezeigt. In an sich bekannter Weise sind in dem Mikrocontroller 28 auf einem einzigen Halbleiterchip ein Prozessor 30, ein Speicher 32 und eine Schnittstellenschaltung 34 integriert, die miteinander über einen Bus 36 verbunden sind. Der Speicher 32 ist in mehrere in unterschiedlichen Technologien ausgestaltete Speicherfelder - z.B. ROM, EEPROM und RAM - gegliedert. In dem Speicher 32 ist ein Betriebssystem 38 enthalten, das in mehreren aufeinander aufbauenden Schichten hardwarenahe Treiber 40 und ein Programmausführungssystem 42 zur Ausführung des nativen Programmcodes, der in den nativen Zusammenstellungen 24.x enthalten ist, aufweist.

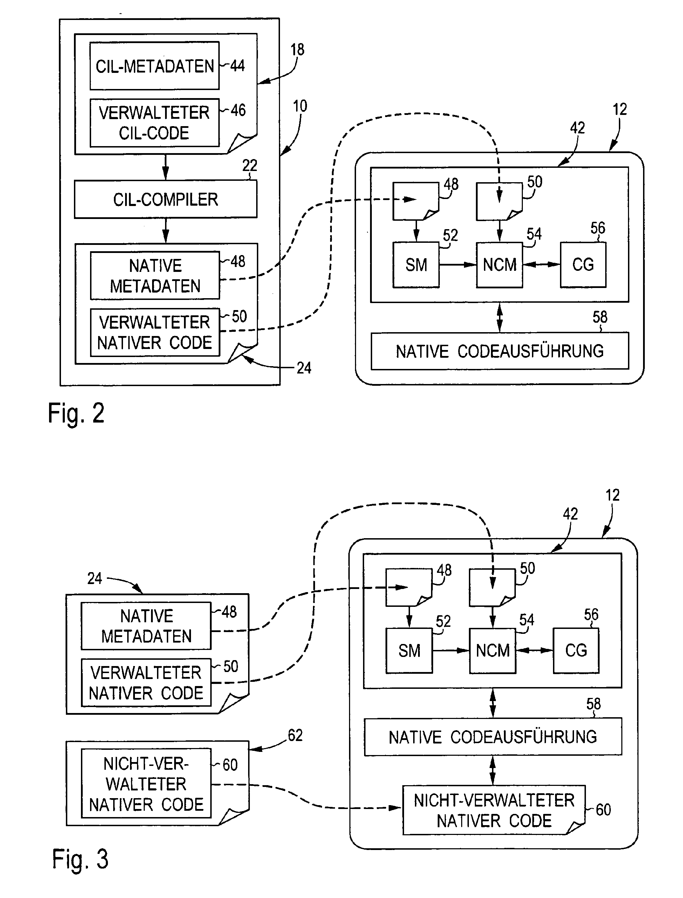

Fig. 2 veranschaulicht insbesondere das Laden eines nativen Programms in den Datenträger 12 und die native Programmausführung in dem dort implementierten Programmausführungssystem 42. Aus Gründen der besseren Übersichtlichkeit ist in Fig. 2 statt der mehreren CIL-Zusammenstellungen 18.x von Fig. 1 nur eine einzige CIL-Zusammenstellung 18 gezeigt. In unterschiedlichen Ausgestaltungen kann diese CIL-Zusammenstellung 18 in Fig. 2 entweder einer einzigen CIL-Zusammenstellung 18.x in Fig.1 oder einer Zusammenfassung mehrerer oder aller CIL-Zusammenstellungen 18.x entsprechen. Ebenso ist in Fig. 2 nur eine einzige native Zusammenstellung 24 gezeigt, die einer nativen Zusammenstellung 24.x von Fig.1 oder einer Kombination mehrerer oder aller dieser Zusammenstellungen 24.x entsprechen kann.

Die CIL-Zusammenstellung 18 weist, wie bereits beschrieben, CIL-Metadaten 44 und verwalteten CIL-Code 46 auf. Entsprechend enthält die native Zusammenstellung 24 native Metadaten 48 und verwalteten nativen Code 50.

In dem nativen Programmausführungssystem 42 des Datenträgers 12 sind insbesondere ein - optionaler - Sicherheitsmanager 52 (SM = *Security Manager),* ein Manager für nativen Code 44 (NCM = *Native Code Manager)* sowie ein - optionales - Speicherbereinigungsmodul 56 (GC = *Garbage Collector)* enthalten. Das Speicherbereinigungsmodul 56 führt auf an sich bekannte Weise Speicherbereinigungsvorgänge aus, wenn diese erforderlich werden.

Der Sicherheitsmanager 52 greift insbesondere auf die in den Datenträger 12 geladenen Metadaten 48 zu und wertet diese - z.B. die darin enthaltenen Zugriffsrechtseinstellungen - aus. In an sich bekannter Weise steuert der Sicherheitsmanager 52 den Manager für nativen Code 54, der seinerseits die native Codeausführung 58 durch den Prozessor 30 des Datenträgers 12 überwacht und kontrolliert. Im Unterschied zu bekannten Systemen ist bei den hier beschriebenen Ausführungsbeispielen der verwaltete native Code 50 von außen in den Datenträger 12 geladen - und nicht zur Laufzeit von einem JIT-Compiler übersetzt - worden.

Die bei den vorliegenden Ausführungsformen vom Programmausführungssystem 42 bereitgestellten Funktionen sind - insbesondere wegen des Verzichts auf einen JIT-Compiler - erheblich weniger aufwändig als die Funktionen eines CLI-Programmausführungssystems wie z.B. des Systems 20 in Fig.1. Auch Programmbibliotheken, wie sie gemäß dem Stand der Technik in einer umfangreichen *Framework Class Library* enthalten sind, werden im nativen Programmausführungssystem 42 der hier beschriebenen Ausführungsbeispiele nicht oder nur in geringerem Maße benötigt. Daher ist das Programmausführungssystem 42 besonders kompakt und benötigt nur relativ wenig Platz im Speicher 18 des Datenträgers 12.

Fig. 3 zeigt eine Ausführungsalternative, bei der zusätzlich eine optimierte Schnittstelle zum Laden und Ausführen von nicht-verwaltetem nativen Code 60 vorgesehen ist. Solcher nicht-verwalteter Code 60 kann beispielsweise in einer vorgegebenen Bibliothek 62 (z.B. einer DLL = *Dynamic Link Library)* enthalten sein. In vielen Anwendungen ist die Weiterbenutzung einer solchen Bibliothek 62 wünschenswert oder sogar unumgänglich.

In dem in Fig. 3 dargestellten Ausführungsbeispiel wird der nicht-verwaltete native Code 60 in den Speicher 32 des Datenträgers 12 geladen und steht dann zur nativen Codeausführung 58 zur Verfügung. Der nicht-verwaltete native Code 60 wird unter Steuerung des Betriebssystems 38 sehr effizient ausgeführt, da keine Laufzeit-Sicherheitsüberprüfungen durch den Manager für nativen Code 54 erfolgen.

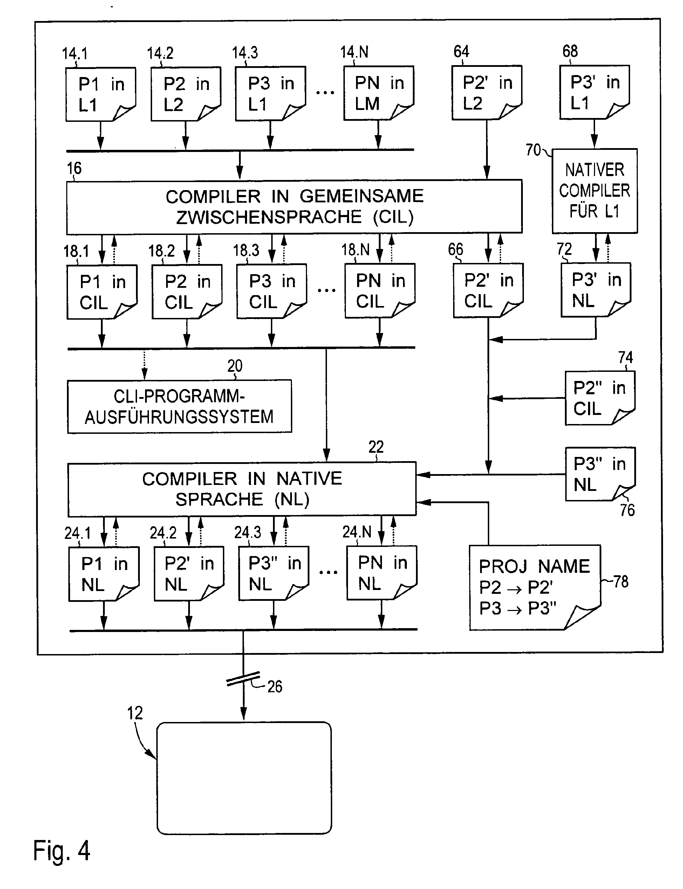

In Fig. 4 ist eine Ausführungsalternative dargestellt, bei der insgesamt mehr Varianten zum Einbinden unterschiedlicher Codebestandteile in das Entwicklungsprojekt und zum Erstellen von Projektvarianten existieren.

Als erstes Beispiel für diese Möglichkeiten ist in Fig. 4 ein alternativer Quellcode 64 gezeigt, der eine erste Variante P2' des zweiten Programms P2 in der zweiten Sprache L2 darstellt. Der Quellcode 64 wird von dem CIL-Compiler 16 in die gemeinsame Zwischensprache übersetzt, genauer gesagt, in eine CIL-Zusammenstellung 66 der ersten Variante P2' des zweiten Programms P2.

Als zweites Beispiel ist in Fig. 4 ein alternativer Quellcode 68 mit einer ersten Variante P3' des dritten Programms P3 in der Sprache L1 gezeigt. Dieser Quellcode 68 wird von einem Compiler 70, der die erste Sprache L1 in nativen, prozessorabhängigen Code übersetzt, in eine entsprechende NL-Zusammenstellung 72 der ersten Variante P3' des dritten Programms P3 umgewandelt.

Als drittes Beispiel ermöglicht es das in Fig. 4 gezeigte System ferner, Zusammenstellungen oder Programmcode, die manuell in der Zwischensprache CIL oder in der nativen Sprache NL geschrieben wurden, in den Programmentwicklungsprozess einzubinden. Hierzu zeigt Fig. 4 beispielhaft mit dem Bezugszeichen 74 eine in der gemeinsamen Zwischensprache CIL manuell erstellte zweite Variante P2" des zweiten Programms P2 und mit dem Bezugszeichen 76 eine in der nativen Sprache NL manuell erstellte zweite Variante P3" des dritten Programms P3.

Der native Compiler 22 ist in dem Ausführungsbeispiel von Fig. 4 so ausgestaltet, dass er nicht nur CIL-Zusammenstellungen, sondern auch NL-Zusammenstellungen sowie CIL- und NL-Programmcode als Eingabedateien zu verarbeiten vermag. Der Übersetzungsvorgang des nativen Compilers 22 lässt sich hier durch eine Steuerdatei 78 beeinflussen. Insbesondere können durch geeignete Definitionen in der Steuerdatei 78 bestimmte Programme Px - also Komponenten eines Entwicklungsprojekts - durch Varianten Px', Px", ... ersetzt werden. So weist beispielsweise die in Fig. 4 gezeigte Steuerdatei 78 den NL-Compiler 22 an, statt des zweiten Programms P2 dessen erste Variante P2' zu verwenden und statt des dritten Programms P3 dessen zweite Variante P3" zu verwenden.

Die durch die Steuerdatei 78 angegebenen Ersetzungen spiegeln sich in den vom Compiler 22 erzeugten nativen Zusammenstellungen 24.x für das jeweilige Entwicklungsprojekt wider. Hierbei werden Ersetzungen von Komponenten, die in der gemeinsamen Zwischensprache CIL vorliegen, vor der Übersetzung des Projekts von CIL nach NL vorgenommen, während Ersetzungen von Komponenten, die in der nativen Sprache NL vorliegen, nach der Übersetzung des Projekts von CIL nach NL vorgenommen werden.

In einer Ausführungsalternative kann die Steuerdatei 78 mehrere Sektionen mit unterschiedlichen Sätzen von Ersetzungsregeln aufweisen, von denen je ein Ersetzungsregelsatz bei der Kompilierung und Zusammenstellung eines Projekts ausgewählt wird.

Insgesamt wird durch die Verwendung von Codevarianten und Ersetzungsregeln gemäß Fig. 4 erreicht, dass Programme Px - also Komponenten eines Projekts -, die z.B. im Hinblick auf die Rechenzeit oder den Speicherplatz kritisch sind, für die Anwendung auf einem bestimmten Datenträger 12 nachträglich optimiert werden können. Auch mangelhafte automatische Optimierungen des CIL-Compilers 16 oder des NL-Compilers 22 können auf diese Weise ausgeglichen werden. Für die Ausführung des Projekts innerhalb der auf dem Entwicklungssystem 10 zur Verfügung stehenden CLI-Programmausführungsumgebung 20 sind solche Optimierungen wegen der in viel größerem Maß zur Verfügung stehenden Ressourcen normalerweise nicht erforderlich; sie können jedoch zu Testzwecken vorgenommen werden.

## Patentansprüche

1. Verfahren zum Erzeugen mindestens eines zur Ausführung durch einen Prozessor (30) eines tragbaren Datenträgers (12) vorgesehenen Programms (Px), mit den Schritten:
- außerhalb des Datenträgers (12) durchgeführtes Kompilieren von Quellcode (14.x), der nicht notwendigerweise in einer einzigen Programmiersprache (Lx) vorliegt, in eine prozessorunabhängige Zwischensprache (CIL), und
- außerhalb des Datenträgers (12) durchgeführtes Kompilieren der prozessorunabhängigen Zwischensprache (CIL) in eine für den Prozessor (30) des tragbaren Datenträgers (12) native Sprache (NL).

2. Verfahren nach Anspruch 1, **dadurch gekennzeichnet, dass** beim Kompilieren des Quellcodes (14.x) mindestens eine Zusammenstellung (18,18.x) erzeugt wird, die Metadaten (44) und verwalteten CIL-Code (46) in der prozessorunabhängigen Zwischensprache (CIL) enthält.

3. Verfahren nach Anspruch 1 oder Anspruch 2, **dadurch gekennzeichnet, dass** beim Kompilieren der prozessorunabhängigen Zwischensprache (CIL) mindestens eine Zusammenstellung (24, 24.x) erzeugt wird, die Metadaten (48) und verwalteten nativen Code (50) in der für den Prozessor (30) des Datenträgers (12) nativen Sprache (NL) enthält.

4. Verfahren nach einem der Ansprüche 1 bis 3, **dadurch gekennzeichnet, dass** die Zwischensprache die *Common Intermediate Language* gemäß der Norm ECMA-335 ist.

5. Verfahren nach einem der Ansprüche 1 bis 4, **dadurch gekennzeichnet, dass** zum Kompilieren der Zwischensprache (CIL) in die native Sprache (NL) ein Compiler (22) verwendet wird, der eine Funktionalität zur wahlweisen Ersetzung eines Programms (Px) durch eine Programmvariante (Px', Px", ...) aufweist.

6. Verfahren nach Anspruch 5, **dadurch gekennzeichnet, dass** die Ersetzung wahlweise auf der Ebene der Zwischensprache (CIL) oder auf der Ebene der nativen Sprache (NL) erfolgt.

7. Verfahren zum Ausführen mindestens eines Programms (Px) durch einen Prozessor (30) eines tragbaren Datenträgers (12), wobei das Programm (Px) als Zusammenstellung (24, 24.x) vorliegt, die Metadaten (48) und nativen Code (50) enthält, mit den Schritten:
- Laden der Zusammenstellung (24, 24.x) von einer außerhalb des Datenträgers (12) befindlichen Quelle in einen Speicher (32) des Datenträgers (12), und
- natives Ausführen (58) des nativen Codes (50) durch den Prozessor (30) des Datenträgers (12) in einem Programmausführungssystem (42).

8. Verfahren nach Anspruch 7, **dadurch gekennzeichnet, dass** das Programmausführungssystem (42) einen zumindest auch in Abhängigkeit von den Metadaten (48) gesteuerten Sicherheitsmanager (52) aufweist.

9. Verfahren nach Anspruch 7 oder Anspruch 8, **dadurch gekennzeichnet, dass** das Programmausführungssystem (42) einen Manager für nativen Code (54) zur Überwachung der nativen Codeausführung (58) aufweist.

10. Verfahren nach einem der Ansprüche 7 bis 9, **dadurch gekennzeichnet, dass** das Programmausführungssystem (42) frei von einem *Just-in-Time-*(JIT)-Compiler ist.

11. Verfahren nach einem der Ansprüche 7 bis 10, **dadurch gekennzeichnet, dass** der in der Zusammenstellung (24, 24.x) enthaltene native Code (50) verwalteter nativer Code (50) ist, und dass das Verfahren ferner die Schritte aufweist:
- Laden von nicht-verwaltetem nativen Code (60) von einer außerhalb des Datenträgers (12) befindlichen Quelle in den Speicher (32) des Datenträgers (12), und
- natives Ausführen (58) des nicht-verwalteten nativen Codes (50) durch den Prozessor (30) des Datenträgers (12).

12. Verfahren nach einem der Ansprüche 7 bis 11, **dadurch gekennzeichnet, dass** die Zusammenstellung (24, 24.x) durch ein Verfahren nach einem der Ansprüche 1 bis 6 erzeugt wurde.

13. Vorrichtung, insbesondere Entwicklungssystem (10), die dazu eingerichtet ist, ein Verfahren nach einem der Ansprüche 1 bis 6 auszuführen.

14. Tragbarer Datenträger (12), insbesondere Chipkarte oder Chipmodul, mit einem Prozessor (30) und mindestens einem Speicher (32), wobei der Datenträger (12) dazu eingerichtet ist, ein Verfahren nach einem der Ansprüche 7 bis 12 auszuführen.

15. Computerprogrammprodukt mit einer Vielzahl von Programmbefehlen, die dazu eingerichtet sind, eine programmierbare Vorrichtung zur Ausführung eines Verfahrens nach einem der Ansprüche 1 bis 12 zu veranlassen.
